# EUROPEAN PATENT APPLICATION

(11) **EP 1 353 015 A2**
(43) Date of publication of application: **15.10.2003**
(21) Application number: 03076065.6
(22) Date of filing: 11.04.2003
(51) Int. Cl.: E03F 3/00

(54) **Covering and marking device for an underground pipe**

(30) Priority: 11.04.2002 NL 1020367
(71) Applicant: Vaartjes, Wisse Klaas, 8251 VS Dronten (NL)
(72) Inventor: Vaartjes, Wisse Klaas, 8251 VS Dronten (NL)
(74) Representative: De Hoop, Eric

(57) **Abstract**

The invention relates to a covering and marking device for an underground standpipe.

The invention regards a covering and marking device of a vertical standpipe mounted on a sewage pipe situated underground, the covering device being designed such that it also serves as marking for the highest point of the vertical standpipe, it being the object that during carrying out mechanic excavation operations the standpipe can be more quickly localised and damage to the standpipe and the sewage system is prevented.

## Description

The invention relates to a covering or sealing device for an underground pipe.

Such sealing devices are generally known. For instance lids or caps are available for sealing ends of underground pipes of various dimensions, for instance of standpipes of sewage systems, mounted on a sewage pipe arranged below ground level. Often standpipes are arranged on such sewage pipes or pipes in order to arrange additional provisions at a later stage, or to make connection to premises, rainwater discharges and the like.

In case of adjustments to or other operations on the sewage system or another underground pipe system it is often problematic to find back the pipe, particularly the pipe end or standpipe. Often this has to be done entirely manually in order to prevent damage of the pipe. This is time-consuming, the more so as such pipes are often situated underneath a hard surface or paving, as a result of which usually too large a part of said hard surface has to be laid bare.

It is an object of the invention to improve on this, and at least to partially overcome said drawbacks.

To that end the invention provides a sealing device for sealing a pipe situated underground, the sealing device being designed so as to also serve as marking point, preferably as marking point of height, for quickly and without damage digging the pipe free.

The sealing device according to the invention is designed such that it serves as marking of an underground pipe to be able to easily find it back. In addition the sealing device has the object of direction marking of the underlying main sewer and location marker of the built-in aids and other sewer components in the sewage system.

The invention offers the possibility to provide the sealing of a pipe, preferably a standpipe, with a number of additional functions, in order to prevent the entering of other materials than desired. As a result, when carrying out operations on the sewage system, standpipes and sewage structures can be more quickly and efficiently traced and recognised without immediately damaging the standpipe at discovery. When mechanically searching for standpipes and sewage structures, that have been provided with the covering and marking device, the presence of attendant personnel during the operations to be carried out is less necessary, which results in an economic advantage.

When excavating the soil in layers, in layer thicknesses that do not exceed the height of the marking device, the covering and marking device can be found back quickly, without touching or damaging the pipe.

It will be clear that pipe should be taken broadly, and that an underground shaft for for instance cesspits or wells have to be included here.

The covering and marking device comprises a sealing cap provided with a receiving device preferably having a dovetailed recess in it, it being an object to place a marking device in said recess, said marking device preferably having a dovetailed broadening at the lower side that can be placed in the recess without enabling it to get out of the receiving device when soil is added to the structure.

The receiving device is closed at one of either ends of the recess in order to fixate the marking device when arranging it in the receiving device.

The design and the colour of the marking device has preferably been selected such that when carrying out excavation operations immediately near the covering and marking device it quickly catches the eye.

Preferably the marking device is flexible to be able to resist the mechanical forces that are exerted on the structure during the searching and therefore excavation of the soil near the covering and marking device, without causing damage to both the covering and marking device and the standpipe and the underlying sewage system.

By placing the covering device such on the standpipe, so that the marking device is situated with the horizontal side parallel to the main sewer, the direction of the sewage system lying deeper can be established at a later stage after digging the covering and marking device free, without having to dig even deeper to that end.

In an embodiment of the sealing device according to the invention it comprises a sealing cap for sealing the ends of the pipe, provided with marking means.

In a further embodiment of it the marking means extend from the sealing cap.

In yet a further embodiment of it the marking means comprise a flexible strip.

The sealing device according to the invention, particularly for a sewage pipe, is characterized in that the sealing device comprises at least one, preferably synthetic, sealing cap and, preferably synthetic, marking means, a recess preferably being present in the one part in which the other part can be attached, the marking means preferably being detachable from the sealing cap.

In an embodiment of the sealing device the marking means are flexible in order to be able to absorb mechanical forces exerted on the making means during digging the pipe free, without the pipe being damaged.

In addition the application relates to a sealing device for an end of an underground pipe, preferably a sewage standpipe, characterized in that the sealing device has been provided with an attachment structure for attaching an electronic identification label, preferably a so-called transponder, for localisation and identification of the pipe.

Furthermore the application relates to a method for excavating an underground pipe end, the pipe end being provided with a sealing device according as described above, an excavator above ground removing soil in layers until the marking means become visible, the layer thickness of the soil to be removed preferably maximally having the size of the length of the marking means.

In addition the invention relates to a method for placing underground pipes, the pipes being provided with standpipes, and the ends of the standpipes being provided with sealing devices as described above.

In addition the invention relates to a sealing cap or to marking means, suitable for a sealing device as described above.

Furthermore the invention relates to a marking device for marking the position of an underground pipe or shaft, comprising an indicator means as an aid in determining the position of the underground pipe or shaft, preferably when digging the pipe end free, and an attachment means for attaching the indicator means on the pipe or shaft. As a result an underground pipe or shaft can easily be found back in later operations. In addition such a device is easy to arrange, also on existing pipes or shafts.

In an embodiment of the marking device the attachment means has been adapted for attaching the marking device at an end of the pipe or shaft.

In an embodiment the attachment means also seals the end, preferably the attachment means is a lid. As a result two functions are united.

An embodiment for sealing an underground pipe end, comprises the attachment means, a lid, fitting on the pipe end for closing it off, the lid being provided the indicator means as an aid in determining the position of the underground pipe end, preferably when digging the pipe end free.

Such a marking device has acquired an additional function. Particularly because it turned out that the ends of a pipe, as for instance formed by standpipes, are often hard to find.

In an embodiment of said marking device the indicator means extend from the lid, and preferably comprise a flexible strip extending from the lid, preferably a synthetic strip.

Especially the flexible synthetic strip offers a simple means for marking the pipe ends. The strip usually is made of polypropylene (PP) or a comparable synthetic material, and generally 1-3 mm thick. As a result a good combination of flexibility and rigidity is achieved: When digging free with an excavator such a strip easily bends along, whereas during covering and digging free it remains directed upwards as a result of which it is easy to notice, because the strip springs back into its original position.

In an embodiment the indicator means is detachable from the lid or attachment means. As a result the lid can also be used without indicator means in the usual manner, and if necessary an indicator means can be arranged. In addition the parts are easy to store and keep in stock and distribute. Moreover an indicator that has been damaged during digging free can easily be replaced.

In an embodiment the indicator means comprise means that are electronically detectable, preferably said means are metal parts or a transponder.

If so desired a transponder can be attached to the strip by means of a snap connection, preferably at the end of the strip. As a result the transponder comes closer to ground level and thus is better detectable.

A transponder may in addition be equipped with a code indicating a specific element or location of the pipe system. Optionally detection means can be connected to a computer which comprises a database of a pipe system and the marked points, and software may display a schematic view of the pipe system with an indication of the specifically noted marked pipe end.

Another possibility is to provide the strip with an (cast-in) metal part. Said metal part can be noticed by means of a metal detector.

The invention is further elucidated on the basis of an exemplary embodiment of a covering device and method according to the invention, in which:
Figure 1 shows a front view of a covering device according to the invention,
Figure 2 shows a cross-section of the covering device of figure 1,
Figure 3 shows an alternative embodiment of the covering device according to the invention,
Figure 4 shows a covering device used on a sewage pipe.

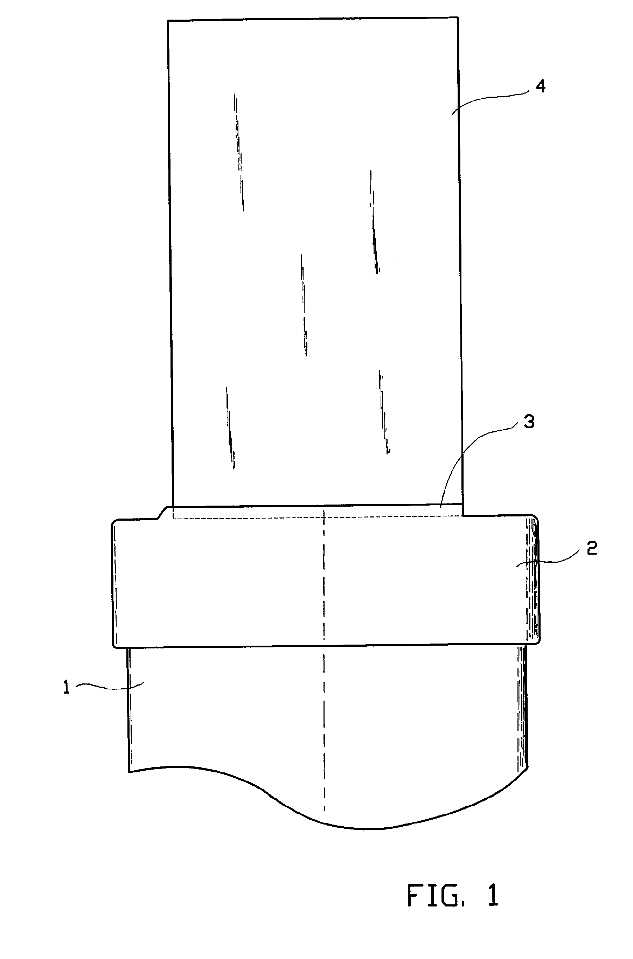

In figure 1 the front view of a possible geometry of the covering and marking device is schematically shown. The covering device 2 has here been arranged on the standpipe 1. A receiving device 3 is situated on the covering device 2, which receiving device has been provided with a dovetailed recess in which the marking device 4 provided with a dovetailed broadening can be arranged.

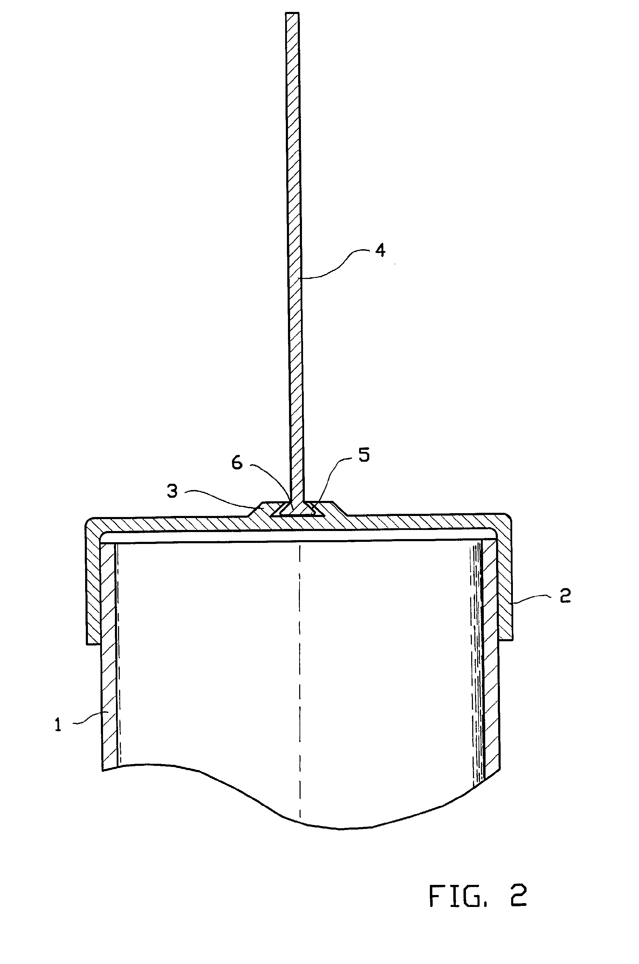

In figure 2 a cross-section of the side view of the possible geometry of the covering and marking device according to the invention of figure 1 is shown.

The marking device 4 provided with a dovetailed broadening 6 is designed such that said broadening fits in the free space 5 of the receiving device 3 and after arrangement and in principle only through destructive actions can get loose from the receiving device 3.

Particularly figures 1 and 2 show a lid 2 which is known per se and is used to seal ends of pipes. The lid according to the invention has been provided with attachment means, here an accommodation space 5 bounded by lips 3. The marking means here are a flexible synthetic strip, for instance of polypropylene (PP), which at its lower side has been provided with a thickening 6 fitting in the accommodation space 5. The strip can be slid into the accommodation space in the direction perpendicular to the paper in figure 2.

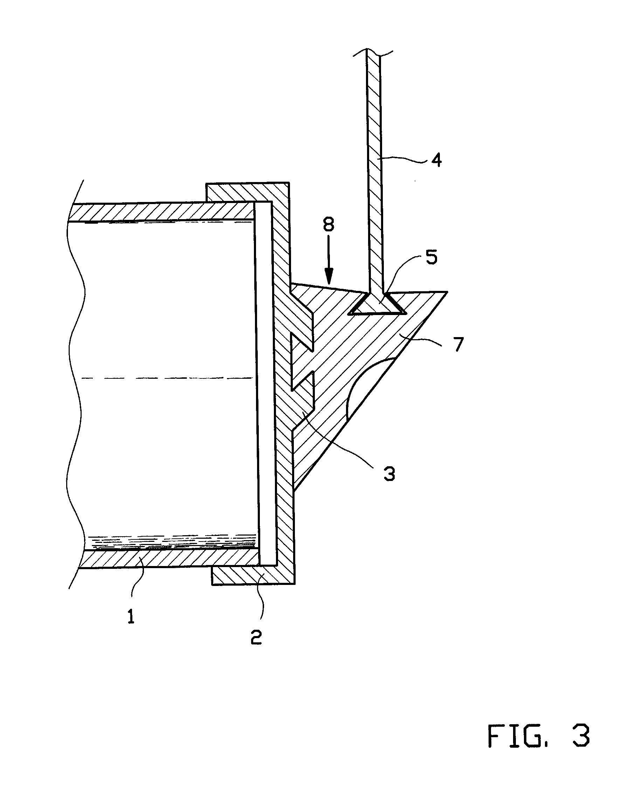

Figure 3 shows an alternative embodiment for (substantially) horizontal pipes. A lid 2 almost identical to the lid shown in figures 1 and 2 has been shown, which for that purpose has been provided with an adaptor. Said adaptor 7 has first attachment means 8 and can be arranged with them to the attachment means 3 of the lid 2, and has second attachment means, which here offer an accommodation space 5 for the thickening 6 at the lower side of the flexible strip 4. Due to the mutual orientation of the first and second attachment means it is possible to mount the flexible strip 4 at an angle, preferably perpendicular as shown in the figure, to the axis of the pipe. As a result it is possible to direct the flexible strip 4 upwards, as a result of which the strip extends beyond the pipe. In addition the same lid 2 and strip 4 can be used without the adapter 7 in the manner as described in the figures 1 and 2.

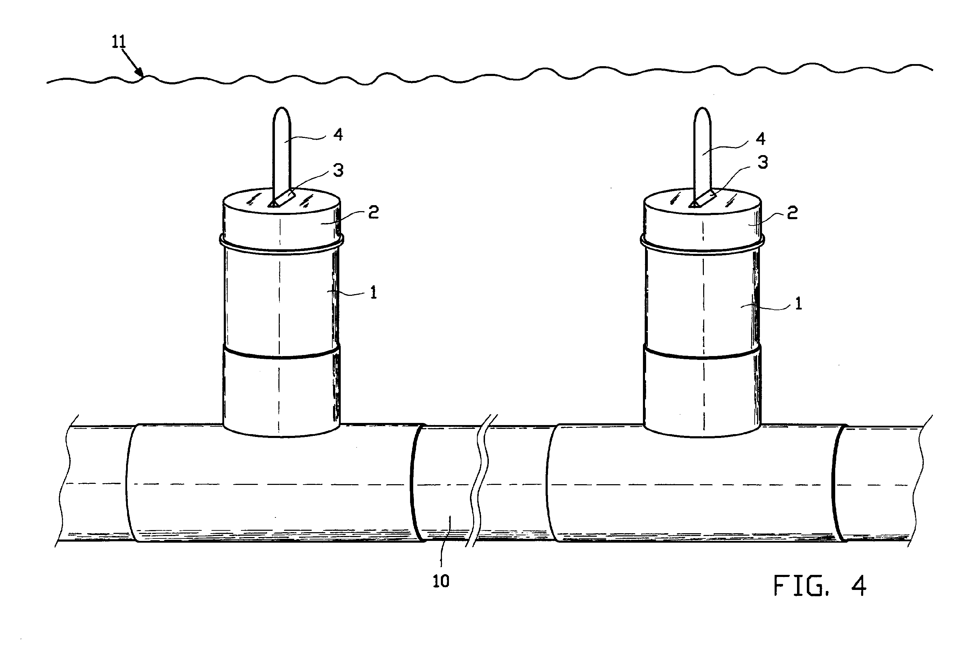

Figure 4 shows a pipe system, here a sewage system 10, provided with standpipes 1. The whole is situated below ground level 11. It can be seen that in mounted situation the flexible strips 4 extend beyond the standpipes. When soil is now removed in layers, a layer having a maximum thickness equalling the distance between the upper side of the strip 4 and the lid 2 being removed each time, the chance of damaging the standpipe 1 and/or sewage system 10 is minimal.

Because the strip is detachable the lid can also be used in the already known manner. Moreover the attachment means can also serve for attaching other marking means, such as a transponder. Thus the specific standpipe can be identified, because each transponder is able to transmit a specific code which can be read out above ground in the manner known per se to read out a transponder. In addition the parts take up less room during storage and transport.

Said transponder can if so desired also be arranged at the strip. When the transponder is arranged at the end it moreover has the advantage that the signal can be better received, because thus the transponder is less deeply located.

Naturally the attachment means of the strip 4 and the lid 2 are interchangeable, that means that the lower side of the strip can be provided with lips that engage about a thickening arranged on the lid.

In another embodiment the invention regards a marking device provided with attachment means for attaching the marking device on a pipe or shaft. Preferably the marking device comprises an indicator means, such as the strip described above, and a holder provided with first attachment means for attaching the holder on a pipe or shaft, and second attachment means for attaching the indicator means on the holder.

In an embodiment the holder can be snapped onto the pipe. For instance the holder comprises two legs that partially engage about a pipe.

## Claims

1. Sealing device for sealing a pipe situated underground, the sealing device being designed so as to also serve as marking point, preferably as marking point of height, for quickly and without damage digging the pipe free.

2. Sealing device according to claim 1, **characterized in that** the sealing device comprises a sealing cap for sealing the ends of the pipe, provided with marking means.

3. Sealing device according to claim 2, **characterized in that** the marking means extend from the sealing cap.

4. Sealing device according to claim 3, **characterized in that** the marking means comprise a flexible strip.

5. Sealing device according to claim 1, particularly for a sewage pipe, **characterized in that** the sealing device comprises at least one, preferably synthetic, sealing cap and, preferably synthetic, marking means, a recess preferably being present in the one part in which the other part can be attached, the marking means preferably being detachable from the sealing cap.

6. Sealing device according to one or more of the preceding claims 2-5, **characterized in that** the marking means are flexible in order to be able to absorb mechanical forces exerted on the making means during digging the pipe free, without the pipe being damaged.

7. Sealing device for an end of an underground pipe or shaft, preferably a sewage standpipe, **characterized in that** the sealing device has been provided with an attachment structure for attaching an electronic identification label, preferably a so-called transponder, for localisation and identification of the pipe.

8. Method for excavating an underground pipe end, the pipe end being provided with a sealing device according to any one of the preceding claims 3, 4 or 5, an excavator above ground removing soil in layers until the marking means become visible, the layer thickness of the soil to be removed preferably maximally having the size of the length of the marking means.

9. Method for placing underground pipes, the pipes being provided with standpipes, and the ends of the standpipes being provided with sealing devices according to any one of the preceding claims 1-7.

10. Sealing cap or marking means, suitable for a sealing device according to any one of the preceding claims.

11. Marking device for marking the position of an underground pipe or shaft, comprising an indicator means as an aid in determining the position of the underground pipe or shaft, preferably when digging the pipe end free, and an attachment means for attaching the indicator means on the pipe or shaft.

12. Marking device according to claim 11, **characterized in that** the attachment means has been adapted for attaching the marking device at an end of the pipe or shaft.

13. Marking device according to claim 11 or 12, **characterized in that** the attachment means also seals the end, preferably the attachment means is a lid.

14. Marking device according to claim 11-13, comprising a lid, fitting on the pipe end for closing it off, the lid being provided the indicator means as an aid in determining the position of the underground pipe end, preferably when digging the pipe end free.

15. Marking device according to claim 11-14, **characterized in that** the indicator means extends from the lid, and preferably comprises a flexible strip extending from the lid, preferably a synthetic strip.

16. Marking device according to claim 11-15, the indicator means being detachable from the attachment means or lid.

17. Marking device according to claim 11-16, the indicator means comprising means that are electronically detectable, preferably said means are metal parts or a transponder.
